# EUROPÄISCHE PATENTSCHRIFT

(11) **EP 4 156 919 B1**
(45) Veröffentlichungstag und Bekanntmachung des Hinweises auf die Patenterteilung: **24.04.2024**
(21) Anmeldenummer: 21730456.7
(22) Anmeldetag: 28.05.2021
(51) Int. Cl.: A01K 15/02

(54) **SPIELZEUG FÜR TIERE, INSBESONDERE HUNDE ODER KATZEN**
TOY FOR ANIMALS, ESPECIALLY DOGS OR CATS
JOUET POUR ANIMAUX, NOTAMMENT LES CHIENS OU LES CHATS

(30) Priorität: 29.05.2020 AT 504732020
(43) Veröffentlichungstag der Anmeldung: 05.04.2023
(73) Patentinhaber: Citak, Andrzej, 2281 Raasdorf (AT)
(72) Erfinder: Citak, Andrzej, 2281 Raasdorf (AT)
(74) Vertreter: Wildhack & Jellinek Patentanwälte
(86) Internationale Anmeldenummer: PCT/AT2021/060185
(87) Internationale Veröffentlichungsnummer: WO 2021/237264

(56) Entgegenhaltungen:
- Sauerland Marke: "SAUERLAND Intelligenzspiel Hundeklavier, Hundespielzeug mit Belohnung, Kombinationsspiel, Motivationsspielzeug: Amazon.de: Haustier", AMAZON, 22. September 2016 (2016-09-22), Seiten 1-7, XP055819524, Gefunden im Internet: URL:https://www.amazon.de/Intelligenzspiel -Hundeklavier-Hundespielzeug-Belohnung-Kom binationsspiel/dp/B01LYL4W14 [gefunden am 2021-06-30]

## Beschreibung

Die Erfindung betrifft ein Spielzeug für Tiere, insbesondere Hunde oder Katzen.

Aus dem Stand der Technik sind verschiedene Spielzeuge für Tiere bekannt, bei denen als Belohnung nach erfolgreichem Absolvieren des Spiels Futter oder Tierleckereien freigegeben werden. Dabei sind meist mit der Schnauze oder den Pfoten Plättchen, unter denen die Tierleckereien versteckt sind, zu verschieben oder beispielsweise mit Tierleckereien gefüllte Kästchen zu öffnen. Aus der WO 2014/089595 A1 ist beispielsweise ein Hundespielzeug in Art eines Schiebepuzzles bekannt, bei dem Plättchen in zwei zueinander normal stehenden Richtungen verschoben werden können, um an das darunter verborgene Futter zu gelangen.

Ein Nachteil bei diesen bekannten Vorrichtungen ist, dass die darin verborgenen Leckereien durchwegs durch Verschieben mit der Schnauze oder den Pfoten erhalten werden können, sodass nur ein begrenzter Lerneffekt beim Tier erzielt werden kann und die Spiele nach kurzer Zeit für das Tier uninteressant werden.

Aus der DE 202006010218 U1 ist ein Hundespielzeug mit einem variablen Steck- bzw. Schraubsystem bekannt, bei dem eine mit Tierleckereien bzw. Leckerlis gefüllte Flasche um 360° um eine horizontale Achse drehbar angeordnet ist und der Hund an einem Seil, das um den Hals der Plastikflasche angeordnet ist, ziehen muss, um die Flasche in eine Position zu drehen, in der eine Tierleckerei aus der Flasche herausfällt.

Nachteil bei dem bekannten Hundespielzeug mit der drehbaren Flasche ist, dass der Hund die Flasche mit einer Schnur drehen muss und hier die Gefahr groß ist, dass das Spielzeug rasch unbrauchbar wird, speziell wenn der Hund mit seinen Zähnen oder Krallen an der Schnur zieht. Ein weiterer Nachteil ist, dass alle Leckereien gleichzeitig aus der Flasche fallen, wenn der Hund diese in eine vertikale Position dreht, sodass der Lerneffekt für das Tier minimal ist und das Spiel in kurzer Zeit uninteressant wird.

Ferner bietet die Firma SunnyDogs ein Hundespielzeug mit Belohnung in Form eines Hundeklavier aus Echtholz an, wo ein Hund die richtige Taste drücken muss, um mit einem Leckerli belohnt und weiter motiviert zu werden.

Aufgabe der Erfindung ist es daher, ein Spielzeug für Tiere bereitzustellen, das einem Tier ein über das für die bekannten Verschiebespiele erforderliches Maß an Geschicklichkeit abverlangt und das Tier über einen längeren Zeitraum beschäftigt und interessiert hält, während es gleichzeitig robust aufgebaut ist.

Die Erfindung löst diese Aufgabe mit einem Spielzeug zur Förderung der Intelligenz von Tieren, insbesondere von Hunden oder Katzen, mit den Merkmalen von Patentanspruch 1. Bei einem Spielzeug, das folgende Komponenten umfasst
- eine Grundplatte, ein, insbesondere längliches, Verbindungselement und von der Grundplatte abstehend angeordnete Halteelemente zum Tragen des Verbindungselements und
- zumindest einen länglichen, an einem Ende geschlossenen und an einem Ende offenen Hohlkörper, in den kleinstückige Tierleckereien einlegbar sind, wobei der zumindest eine Hohlkörper derart um die Längsachse des Verbindungselements dreh- bzw. kippbar an dem Verbindungselement angeordnet und ausgebildet ist,
   - dass das geschlossene Ende des Hohlkörpers bei einer Betätigung durch das Tier von der Grundplatte weg nach oben kippt, und
   - dass der Hohlkörper, insbesondere nach einer Betätigung durch das Tier zur Entnahme einer Tierleckerei im Bereich des offenen Endes des Hohlkörpers, selbstständig, insbesondere der Schwerkraftwirkung folgend, in den Ausgangszustand zurückkehrt,

ist erfindungsgemäß vorgesehen,
   - dass zumindest ein an der Oberseite der Grundplatte angeordnetes flächig, insbesondere plättchenförmiges, vorzugsweise mit rechteckiger Grundfläche,
ausgebildetes Klangelement vorgesehen ist,
   - dass das Klangelement an der Oberseite der Grundplatte im Auflagebereich des geschlossenen Endes des Hohlkörpers angeordnet ist,
   - dass das geschlossene Ende (32) des Hohlkörpers (3) in einem Ausgangszustand auf dem Klangelement (4) aufliegt, und
   - dass ein Geräusch durch das Auftreffen des geschlossenen Endes (32) des Hohlkörpers (3) auf dem Klangelement (4) erzeugbar ist.

Durch diese Ausgestaltung eines erfindungsgemäßen Spielzeugs ist einerseits sichergestellt, dass das Tier über einen langen Zeitraum beschäftigt und interessiert bleibt, da der Hohlkörper selbstständig immer wieder in den Ausgangszustand zurückkehrt, was es für das Tier schwierig macht, den Hohlkörper mit beispielsweise der Pfote oder der Schnauze zu betätigen, um Tierleckereien im Bereich des offenen Endes zu entnehmen. Ein vollständiges Entnehmen aller Leckereien auf einmal wird durch das selbstständige Zurückkehren in den Ausgangszustand ebenfalls vermieden. Zusätzlich wird die Intelligenz des Tiers dadurch gefördert, dass das Tier einen Zusammenhang zwischen der Rotation des Hohlkörpers und der Ausgabe der Tierleckereien herstellen muss, was für das Tier eine komplexe Aufgabe darstellt. Weiters wird die Intelligenz des Tieres dadurch gefördert, dass beim Auftreffen des geschlossenen Endes des Hohlkörpers auf dem Klangelement ein Geräusch entsteht und das Tier einen Zusammenhang zwischen der Rückkehr in den Ausgangszustand, in dem es keine Tierleckereien entnehmen kann und dem Auftreffen des Hohlkörpers auf dem Klangelement herstellen kann.

Durch die erfindungsgemäße Ausgestaltung des Spielzeugs wird die Intelligenz des Tiers bzw. das Interesse des Tiers am Spielzeug weiter gefördert. Durch ein derartiges Klangelement wird es für das Tier erleichtert, einen Zusammenhang zwischen dem Auftreffen des Hohlkörpers auf der Grundplatte bzw. auf deren Oberseite herzustellen, was die Intelligenz fördert. Zusätzlich wird durch die vom Klangelement erzeugten Töne das Interesse des Tiers geweckt.

Unter einem Hohlkörper wird im Zusammenhang mit der Erfindung jeder beliebige Hohlkörper verstanden, der an einem Ende geöffnet und am anderen Ende geschlossen ist, sodass Tierleckereien darin aufbewahrt werden können und der dazu geeignet ist, an einem Verbindungselement angeordnet zu werden.

Unter einem Verbindungselement wird im Zusammenhang mit der Erfindung jedes Element verstanden, das dazu geeignet ist, zwischen zwei Halteelementen angeordnet zu werden und einen Hohlkörper, der mit Tierleckereien gefüllt ist, zu tragen. Beispielsweise können dies längliche, stab- oder drahtförmige Verbindungselemente sein.

Weitere vorteilhafte Ausgestaltungen des Spielzeugs werden in den Merkmalen der abhängigen Ansprüche beschrieben:
Eine hinsichtlich mechanischer Beanspruchung durch das Tier besonders robust ausgestaltete Ausführungsform des Spielzeugs kann bereitgestellt werden, wenn zwei an der Grundplatte einander gegenüberliegend und senkrecht von der Grundplatte abstehend angeordnete Halteelemente vorgesehen sind, wobei die Haltelemente miteinander mittels des Verbindungselements, insbesondere eines Stabelements, verbunden sind.

Ein konstruktiv besonders einfach aufgebautes Spielzeug kann bereitgestellt werden, wenn der Hohlkörper am Verbindungselement nach Art einer Wippe angeordnet ist, wobei im Ausgangszustand das geschlossene Ende des Hohlkörpers auf dem Klangelement aufliegt und das offene Ende von der Grundplatte beabstandet ist.

Um dem Tier die Entnahme von Tierleckereien im Bereich des offenen Endes des Hohlkörpers zu erleichtern, kann vorgesehen sein, dass der zumindest eine Hohlkörper bei einer Betätigung durch das Tier, insbesondere mit einer Pfote oder der Schnauze, entgegen der Schwerkraftwirkung um das Verbindungselement in eine Fressposition kippbar ist, wobei das offene Ende des Hohlkörpers in der Fressposition auf dem auf der Oberseite der Grundplatte angeordneten Klangelement aufliegt, sodass sich im Inneren des Hohlkörpers befindliche Tierleckereien der Schwerkraftwirkung folgend aus dem Hohlkörper heraus bewegen.

Durch diese vorteilhafte Ausgestaltung des Spielzeugs kann erreicht werden, dass das Tier eine gewisse Hilfestellung für die Entnahme der Tierleckereien erhält, da das offene Ende des Hohlkörpers auf der Oberseite der Grundplatte aufliegt und das Tier den Hohlkörper so leichter festhalten kann.

Eine Möglichkeit, mit dem Spielzeug spielende Tiere über einen besonders langen Zeitraum beschäftigt und interessiert zu halten, kann bereitgestellt werden, wenn
- das Spielzeug eine Vielzahl von Hohlkörpern umfasst, die nebeneinander angeordnet sind,
- das Spielzeug eine Vielzahl von separaten, an der Oberseite der Grundplatte nebeneinander angeordneten, Klangelementen umfasst, und
- die einzelnen Hohlkörper am Verbindungselement und die einzelnen Klangelemente an der Oberseite der Grundplatte jeweils derart angeordnet sind, dass jedem Hohlkörper jeweils ein Klangelement zugeordnet ist.

Das Interesse des Tiers am Spielzeug kann weiter gesteigert werden, wenn die einzelnen Klangelemente jeweils unterschiedliche Länge und/oder unterschiedliche Töne oder Tonhöhen aufweisen.

Auf besonders einfache Weise kann das Interesse des Tiers geweckt werden, wenn die Klangelemente zwischen den Haltelement nach steigender Länge, insbesondere wie bei einem Xylophon, angeordnet sind.

Um Klangelemente bereitzustellen, die einerseits für das Tier interessante Geräusche oder Töne erzeugen, und andererseits zu vermeiden, dass die Klangelemente schnell beschädigt werden oder das Tier beim Spielen vergiftet wird, kann vorgesehen sein, dass jedes Klangelement jeweils aus Holz oder Metall oder einer Metalllegierung bestehen.

Damit Haustiere wie Hunde oder Katzen beim Spielen mit dem Spielzeug nicht vergiftet werden, kann vorteilhafterweise vorgesehen sein, dass die Grundplatte und/oder die Halteelemente und/oder das Verbindungselement und/oder die einzelnen Hohlkörper jeweils aus nicht toxischen Werkstoffen, insbesondere Holz, Kunststoff oder Metall, bestehen.

Besonders robuste Hohlkörper, die jedoch vom Tier einfach betätigt werden können, können bereitgestellt werden, wenn jeder Hohlkörper jeweils eine zylindrische Form, insbesondere mit elliptischem oder kreisförmigem Querschnitt, oder eine prismatische Form, insbesondere mit quadratischem, rechteckigem, sechseckigem oder achteckigem Querschnitt, besitzt.

Um dem Tier zu ermöglichen, besonders einfach zu erschnüffeln, wo Tierleckereien versteckt sind, insbesondere wenn mehrere Hohlkörper vorhanden sind, kann vorgesehen sein, dass ausgewählte, insbesondere alle, Hohlkörper im Bereich des geschlossenen Endes jeweils eine, insbesondere kreisförmige, Riechöffnung aufweisen, durch die der Geruch von in den Hohlkörper eingelegten Tierleckereien riechbar ist.

Auf diese Weise kann das Tier erschnüffeln, welche Hohlkörper Belohnungen enthalten und somit erkennen, welche Hohlkörper betätigt werden müssen, um an deren offenen Ende Tierleckereien zu entnehmen.

Um für das Tier einen besonders einfachen Zugang zur jeweiligen Riechöffnung zu gewährleisten, kann vorgesehen sein, dass die Riechöffnung jeweils in der Mantelfläche des jeweiligen Hohlkörpers angeordnet ist, wobei insbesondere vorgesehen ist, dass der Mittelpunkt der Riechöffnung in einer Entfernung zum geschlossenen Ende von 15-40% der Länge des Hohlkörpers angeordnet ist.

Eine besonders einfache Fixierung des jeweiligen Hohlkörpers am Verbindungselement kann erzielt werden, wenn in der Mantelfläche jedes Hohlkörpers jeweils zwei einander, insbesondere auf gleicher Höhe, gegenüberliegende Öffnungen zur Hindurchführung des Verbindungselement angeordnet sind, wobei die Öffnungen vom Schwerpunkt des jeweiligen Hohlkörpers in Richtung des offenen Endes des jeweiligen Hohlkörpers versetzt angeordnet sind.

Um ein einfaches Kippen des Hohlkörpers um das Verbindungselement durch das Tier sicherzustellen, kann vorgesehen sein, dass der Mittelpunkt der Öffnungen jeweils in einer Entfernung zum offenen Ende von 25-45% der Länge des jeweiligen Hohlkörpers angeordnet ist.

Dass das Tier den Hohlkörper besonders einfach mit der Schnauze oder der Pfote kippen kann, dass dieser aber gleichzeitig zuverlässig in den Ausgangszustand zurückkehrt, kann dadurch erzielt werden, dass der Abstand zwischen dem offenen Ende des Hohlkörpers und dem Drehpunkt des Hohlkörpers um das Verbindungselement kleiner ist, als der Abstand zwischen dem Drehpunkt und dem geschlossenen Ende des Hohlkörpers.

Um zu verhindern, dass der Hohlkörper vom Tier über die Fressposition hinaus gekippt bzw. gedreht wird, z.B. unter dem Verbindungselement hindurch gedreht wird, kann bei einem erfindungsgemäßen Spielzeug einerseits vorgesehen sein, dass der Abstand zwischen dem offenen Ende des Hohlkörpers und dem Drehpunkt des Hohlkörpers um das Verbindungselement größer ist, als der Abstand zwischen dem Drehpunkt und der Grundplatte.

Andererseits kann, um zu verhindern, dass der Hohlkörper vom Tier über die Fressposition hinaus gekippt bzw. gedreht wird, z.B. unter dem Verbindungselement hindurch gedreht wird, bei einem erfindungsgemäßen Spielzeug auch vorgesehen sein, dass der Abstand zwischen dem offenen Ende des Hohlkörpers und dem Drehpunkt des Hohlkörpers um das Verbindungselement kleiner ist als der Abstand zwischen dem Drehpunkt und der Grundplatte und dass ein Anschlagselement zur Verhinderung des Durchdrehens des Hohlkörpers vorgesehen ist.

Eine einfache Entnahme von Tierleckereien durch das Tier in der Fressposition, wobei beim Spielzeug gleichzeitig sichergestellt ist, dass der Hohlkörper zuverlässig selbstständig in die Ausgangsposition zurückkehrt, kann erzielt werden, wenn der Hohlkörper mit der Grundplatte im Ausgangszustand einen Winkel von 25° bis 60° einschließt und/oder dass der Hohlkörper mit der Grundplatte in der Fressposition einen Winkel von 45° bis 90° einschließt.

Ein mechanisch besonders stabiles Spielzeug, das gleichzeitig einfach zerlegt werden kann, um die Einzelteile zu säubern, kann bereitgestellt werden, wenn das Verbindungselement, insbesondere das Stabelement, mit dem von der Oberseite der Grundplatte entfernten Endbereich des jeweiligen Haltelements, insbesondere reversibel, verbunden ist.

In einer vorteilhaften Ausführungsform kann vorgesehen sein, dass in der Oberseite der Grundplatte eine längliche Ausnehmung in dem Bereich angeordnet ist, in dem das offene Ende des jeweiligen Hohlkörpers in der Fressposition auf die Grundplatte auftrifft. Um die Intelligenz des Tiers besonders intensiv zu fördern und das Tier besonders lange mit dem Spielzeug beschäftig zu halten, kann die Ausnehmung an zumindest einem Ende eine Zapfen-Aufnahme-Ausnehmung und Hinterschneidungen zum Festhalten von einsteckbaren, in die Hinterschneidungen eingreifenden, Sperr-Zapfen bzw. -Hütchen umfassen. Dabei ist jeweils nur ein begrenzter Bereich dieser Zapfen-AufnahmeAusnehmungen hinterschneidungsfrei, und erst nach Verschieben des jeweiligen SperrZapfens bzw. -Hütchen dorthin, kann das Tier den jeweiligen Sperr-Zapfen bzw. das jeweilige -Hütchen entfernen und den Hohlkörper in der Fressposition bringen, sodass das Tier die im Hohlkörper befindlichen Tierleckerein erhalten kann.

Besonders interessant für das Tier kann das Spielzeug ausgestaltet werden, wenn der zumindest eine Sperr-Zapfen bzw. das zumindest eine -Hütchen zusätzlich zumindest einen ihn voll durchsetzenden zentralen Riechkanal aufweist, über den in der Ausnehmung platzierte Tierleckereien, die sich unter dem Sperr-Zapfen befinden, riechbar sind. Um die Tierleckerei zu erhalten, muss das Tier den Sperr-Zapfen in die Zapfen-Aufnahme-Ausnehmung verschieben, sodass es den Sperr-Zapfen entfernen kann.

Besonders fordernd für das Tier kann das Spielzeug ausgestaltet werden, wenn zumindest eine, in die zumindest eine Zapfen-Aufnahme-Ausnehmung einsteckbare, Sperr-Walzen vorgesehen ist. Sind solche Sperr-Walzen vorhanden, muss dass Tier zunächst die Sperr-Walze entfernen, um die Sperr-Zapfen verschieben zu können, um anschließend die Hohlkörper in die Fressposition bringen zu können und die darin enthaltenen Tierleckerein zu erhalten. Optional kann eine solche Sperr-Walze auch zumindest einen sie voll durchsetzenden zentralen Riechkanal aufweisen, über den in der Ausnehmung platzierte Tierleckereien, die sich unter der Sperr-Walze befinden, riechbar sind.

Weitere Vorteile und Ausgestaltungen der Erfindung ergeben sich aus der Beschreibung und den beiliegenden Zeichnungen.

Beispielhafte Ausführungsformen der Erfindung sind in den Zeichnungen schematisch dargestellt und werden im Folgenden unter Bezugnahme auf die Zeichnungen beispielhaft besch rieben.

Im Folgenden zeigen schematisch:
Fig. 1 eine perspektivische Darstellung eines ersten Ausführungsbeispiels eines erfindungsgemäßen Spielzeugs für Tiere,
Fig. 2 eine Draufsicht des ersten Ausführungsbeispiels aus Fig. 1,
Fig. 3 eine Draufsicht auf die Grundplatte mit Klangelementen des ersten Ausführungsbeispiels aus Fig. 1,
Fig. 4 eine perspektivische Darstellung der Grundplatte mit Klangelementen aus Fig. 3,
Fig. 5 eine Seitenansicht des ersten Ausführungsbeispiels aus Fig. 1,
Fig. 6 eine perspektivische Ansicht des ersten Ausführungsbeispiels aus Fig. 1,
Fig. 7 eine perspektivische Ansicht der Grundplatte mit Klangelementen aus Fig. 3 und Fig. 4,
Fig. 8 und Fig. 9 Detailansichten eines Hohlkörpers des ersten Ausführungsbeispiels aus Fig. 1,
Fig. 10 eine perspektivische Darstellung eines zweiten Ausführungsbeispiels eines erfindungsgemäßen Spielzeugs für Tiere mit einem Sperr-Zapfen und einer Sperr-Walze,
Fig. 11 eine Draufsicht des Ausführungsbeispiels aus Fig. 10,
Fig. 12 eine Seitenansicht des zweiten Ausführungsbeispiels aus Fig. 10,
Fig. 13 eine perspektivische Ansicht des zweiten Ausführungsbeispiels aus Fig. 10,
Fig. 14 eine perspektivische Ansicht der Grundplatte mit Klangelementen des zweiten Ausführungsbeispiels aus Fig. 10.

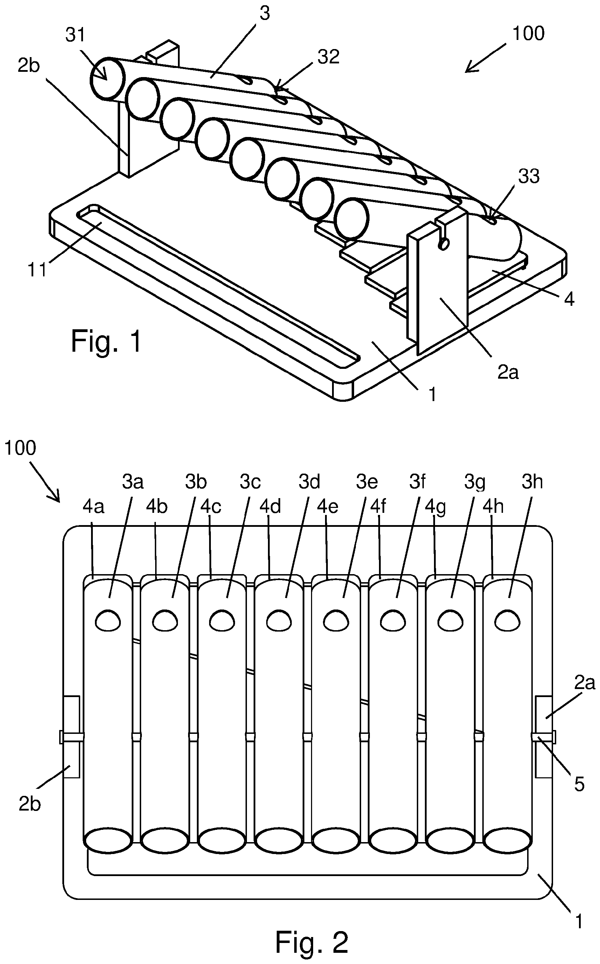

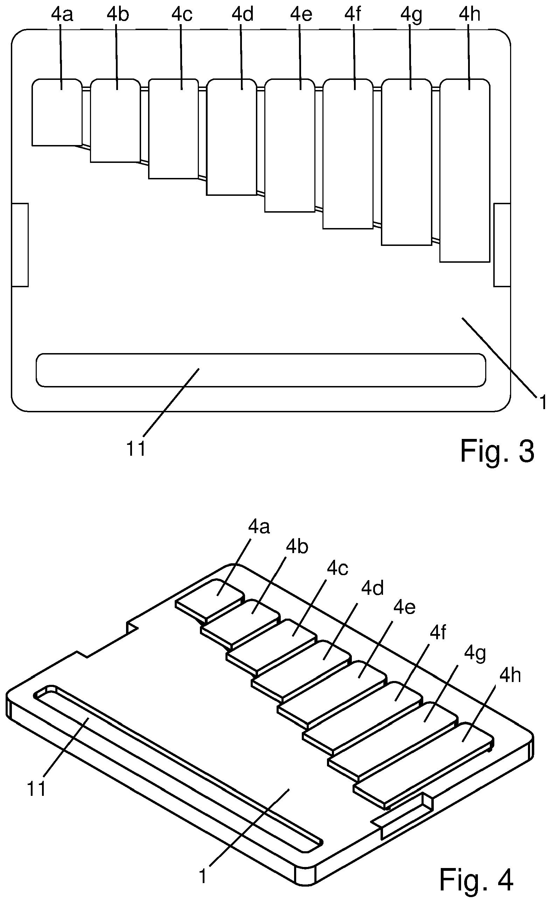

Fig. 1, Fig. 2, Fig. 5 und Fig. 6 zeigen verschiedene Ansichten eines ersten Ausführungsbeispiels eines erfindungsgemäßen Spielzeugs 100 zur Förderung der Intelligenz von Tieren, beispielsweise Haustieren wie Hunden oder Katzen. Die Grundplatte 1 des Spielzeugs 100 ist im ersten Ausführungsbeispiel rechteckig ausgebildet und an deren kürzeren Seiten sind parallel einander gegenüberliegend zwei senkrecht von der Grundplatte 1 abstehende Halteelemente 2a, 2b angeordnet. Die beiden Halteelemente 2a, 2b sind im ersten Ausführungsbeispiel als rechteckige Plättchen ausgeführt, die wie im ersten Ausführungsbeispiel in Ausnehmungen seitlich an der Grundplatte 1 (siehe Fig. 3 und Fig. 4) eingeleimt bzw. eingeklebt oder auch seitlich oder von oben oder unten mit der Grundplatte 1 verschraubt sein können. Die Halteelemente 2a, 2b sind miteinander mit einem länglichen Verbindungselement 5 verbunden, das im ersten Ausführungsbeispiel stabförmig ausgebildet ist. Die Halteelemente 2a, 2b weisen jeweils an deren oberem Ende, das von der Oberseite der Grundplatte 1 entfernt ist, eine Ausnehmung bzw. Einkerbung auf, in die das Verbindungselement 5 eingelegt ist bzw. mit denen das Verbindungselement 5 reversibel verbunden ist.

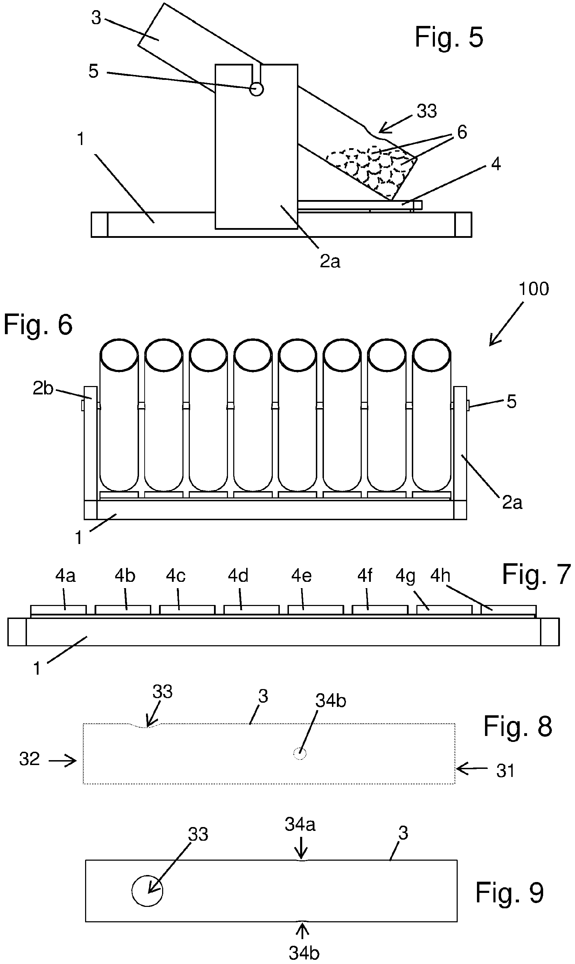

Am Verbindungselement 5 sind im ersten Ausführungsbeispiel acht längliche, zylindrische Hohlkörper 3a, ..., 3h angeordnet, die jeweils ein offenes Ende 31 und ein geschlossenes Ende 32 aufweisen. In die Hohlkörper 3a, ..., 3h können Tierleckerein 6, wie sie schematisch in Fig. 5 angedeutet sind, gefüllt werden. Die Anzahl an Hohlkörpern 3 kann bei einem erfindungsgemäßen Spielzeug 100 jedoch frei gewählt werden und auch ein einzelner Hohlkörper 3 reicht aus, um das Interesse eines Tiers zu wecken und dieses lange zu beschäftigen.

Die Hohlkörper 3a, ..., 3h weisen im ersten Ausführungsbeispiel einen kreisförmigen Querschnitt auf und besitzen jeweils eine Riechöffnung 33, die jeweils im Bereich des geschlossenen Endes 32 an der Oberseite des jeweiligen Hohlkörpers 3a, ..., 3h, die von der Grundplatte 1 wegorientiert ist, angeordnet ist (siehe Fig. 5, Fig. 8 und Fig. 9). Durch diese Riechöffnungen 33 können die kleinstückigen Tierleckereien 6, die in den Hohlkörper 3 eingelegt sind, von einem mit dem Spielzeug spielenden Tier erschnüffelt werden.

Wie in Fig. 5 im Detail für einen einzelnen Hohlkörper 3 ersichtlich ist, sind die einzelnen Hohlkörper 3 kippbar bzw. rotierbar am Verbindungselement 5 angeordnet, sodass diese um die Längsachse des Verbindungselements 5 gekippt werden können, wenn das Tier beispielsweise mit der Schnauze oder der Pfote im Bereich des offenen Endes 31 auf den Hohlkörper 3 drückt.

In einem Grundzustand des ersten Ausführungsbeispiels, der in Fig. 5 dargestellt ist, liegt das geschlossene Ende 32 des Hohlkörpers 3 auf der Oberseite der Grundplatte 1 auf und schließt mit der Grundplatte 1 einen Winkel von ca. 40° ein. Das geschlossene Ende 32 des Hohlkörpers 3 wippt bei einer Betätigung durch das Tier im Bereich des offenen Endes 31 von der Grundplatte 1 weg und kann auf diese Weise soweit gekippt werden, dass der Hohlkörper 3 im Bereich des offenen Endes 31 die Grundplatte 1 berührt und mit der Grundplatte einen Winkel von ca. 70° einschließt. Die Tierleckereien 6, die sich im Inneren des Hohlkörpers 3 befinden, bewegen sich in dieser Fressposition der Schwerkraftwirkung folgend aus dem Inneren des Hohlkörpers 3 heraus. Der Hohlkörper 3 muss also vom Tier entgegen der Schwerkraftwirkung um das Verbindungselement 5 in diese Fressposition gekippt bzw. gewippt werden, damit die Tierleckereien 6 vom Tier entnommen werden können.

Der Hohlkörper 3 ist im ersten Ausführungsbeispiel also wippenartig am Verbindungselement 5 angeordnet, wobei der Drehpunkt des jeweiligen Hohlkörpers 3 vom Schwerpunkt versetzt angeordnet ist, sodass im Ausgangszustand das geschlossene Ende 32 des Hohlkörpers 3 auf der Grundplatte 1 aufliegt und das offene Ende 31 von der Grundplatte 1 beabstandet ist, wie dies in Fig. 5 ersichtlich ist. Wird der Hohlkörper 3 nicht mehr vom Tier betätigt, kehrt der Hohlkörper 3 somit selbstständig, hier der Schwerkraftwirkung folgend, wieder in den Ausgangszustand zurück. Die Versetzung des Drehpunkts vom Schwerpunkt kann dadurch erzielt werden, dass, wie im ersten Ausführungsbeispiel, die Öffnungen 34a, 34b, durch die das Verbindungselement 5 geführt ist, vom Schwerpunkt des Hohlkörpers 3 in Richtung des offenen Endes 31 des Hohlkörpers 3 versetzt angeordnet sind. Auf diese Weise ist der Abstand zwischen dem offenen Ende 31 des Hohlkörpers 3 und dem Drehpunkt des Hohlkörpers 3 kleiner als der Abstand zwischen dem Drehpunkt und dem geschlossenen Ende 32 des Hohlkörpers 3.

Wenn der Hohlkörper 3 in den Ausgangszustand zurückkehrt, trifft ein Bereich bzw. Abschnitt des geschlossenen Endes 32 des Hohlkörpers 3 auf der Oberseite der Grundplatte 1 auf, wie dies in Fig. 5 dargestellt ist. Dabei entsteht ein Geräusch, was das Interesse des Tiers am Spielzeug steigert.

Wie in Fig. 3, Fig. 4, Fig. 6 und Fig. 7 im Detail dargestellt ist, sind im ersten Ausführungsbeispiel an der Oberseite der Grundplatte 1 flächige, plättchenförmige Klangelemente 4a, ..., 4h angeordnet, die eine rechteckige Grundfläche aufweisen. Diese Klangelemente 4a, ..., 4h befinden sich jeweils an der Oberseite der Grundplatte 1 im Auflagebereich des geschlossenen Endes 32 der einzelnen Hohlkörper 3a, ..., 3h. Jedem der Hohlkörper 3a, ..., 3h ist dabei ein Klangelement 4a, ..., 4h zugeordnet. Diese Klangelemente 4a, ..., 4h sind dabei separat an der Oberseite der Grundplatte 1 nebeneinander angeordnet und den einzelnen Hohlkörpern 3a, ..., 3h einzeln zugeordnet. Dies bedeutet, dass mit jedem Hohlkörper 3a, ..., 3h nur ein spezieller Ton durch das Auftreffen auf einem der Klangelemente 4a, ..., 4h erzeugt werden kann. Die einzelnen Klangelemente 4a, ..., 4h weisen unterschiedliche Länge auf, sodass diese unterschiedliche Töne bzw. Tonhöhen erzeugen, wenn das geschlossene Ende 32 des Hohlkörpers 3 auf dem jeweiligen Klangelement 4a, ..., 4h auftrifft. Wie in Fig. 3 und Fig. 4 im Detail ersichtlich ist, sind die einzelnen Klangelemente 4a, ..., 4h unterschiedlich lang und zwischen den Halteelementen 2a, 2b nach steigender Länge in Art eines Xylophons angeordnet. Dies bedeutet, würde das Tier die einzelnen Hohlkörper 3a, ..., 3h in der Reihenfolge von einem Verbindungselement 2a bis zum anderen Verbindungselement 2b nacheinander betätigen, so würde sich die Klangabfolge einer Tonleiter in aufsteigender oder absteigender Reihenfolge ergeben, je nachdem in welcher Richtung das Tier die Hohlkörper 3a, ..., 3h betätigt.

Durch diese unterschiedlichen Töne wird das Interesse des Tiers am Spielzeug geweckt und es beschäftigt sich noch länger mit dem Spielzeug 100, als wenn das Spielzeug 100 keine oder jeweils gleich ausgestaltete Klangelemente 4 aufweisen würde.

Die Grundplatte 1, die Halteelemente 2a, 2b, das Verbindungselement 5 sowie die Hohlkörper 3a, ..., 3h sind im ersten Ausführungsbeispiel aus Holz gefertigt, können jedoch auch aus anderen nicht toxischen Werkstoffen wie Kunststoff oder Metall bestehen. Die Klangelemente 4a, ..., 4h sind im ersten Ausführungsbeispiel ebenfalls aus Holz gefertigt, können jedoch auch aus Metall oder einer Metalllegierung, die für Tiere nicht giftig sind, bestehen.

Wie in Fig. 1 und Fig. 3 ersichtlich ist, kann die Grundplatte 1 auch eine Ausnehmung 11, z.B. eine Fräsung, aufweisen, die sich längs an der Oberseite der Grundplatte 1, an der den Klangelementen 4a, ..., 4h gegenüberliegenden Seite, erstreckt, sodass das offene Ende 31 der einzelnen Hohlkörper 3a, .., 3h in der Fressposition jeweils darin aufliegt. So bleiben Tierleckereien 6, die aus dem Inneren des Hohlkörpers 3 herausrollen, in der Ausnehmung 11 liegen, was dem Tier das Fressen vereinfacht.

Im ersten Ausführungsbeispiel weisen die einzelnen Hohlkörper 3a, ..., 3h eine zylindrische Form mit kreisförmigen Querschnitt auf, dies ist jedoch optional und es kann auch eine zylindrische Form mit elliptischem Querschnitt vorgesehen sein oder auch prismatische Hohlkörper, die beispielsweise quadratischen, rechteckigen, sechseckigen oder achteckigen Querschnitt aufweisen. Auch ist die Riechöffnung 33 in der Mantelfläche der Hohlkörper 3a, ..., 3h an deren Oberseite angeordnet (siehe Fig. 8 und Fig. 9) und weist einen kreisförmigen Querschnitt auf. Die Riechöffnung 33 kann jedoch auch eine beliebige andere Form aufweisen oder beispielsweise in der Stirnseite des jeweiligen Hohlkörpers 3a, ..., 3h am geschlossenen Ende 32 angeordnet sein, oder abwechselnd an der Stirnseite und in der Mantelfläche.

Der Mittelpunkt der Riechöffnung 33 befindet sich im ersten Ausführungsbeispiel im Bereich des ersten Viertels der Länge des Hohlkörpers 3 im Bereich des geschlossenen Endes 32, was vorteilhaft ist, da sich im Ausgangszustand dort die Tierleckereien 6 befinden, wie dies in Fig. 5 dargestellt ist. Die Riechöffnung 33 kann jedoch auch in einer anderen Entfernung zum geschlossenen Ende 32, beispielsweise von 15 bis 40 % der Länge des Hohlkörpers 3, angeordnet sein.

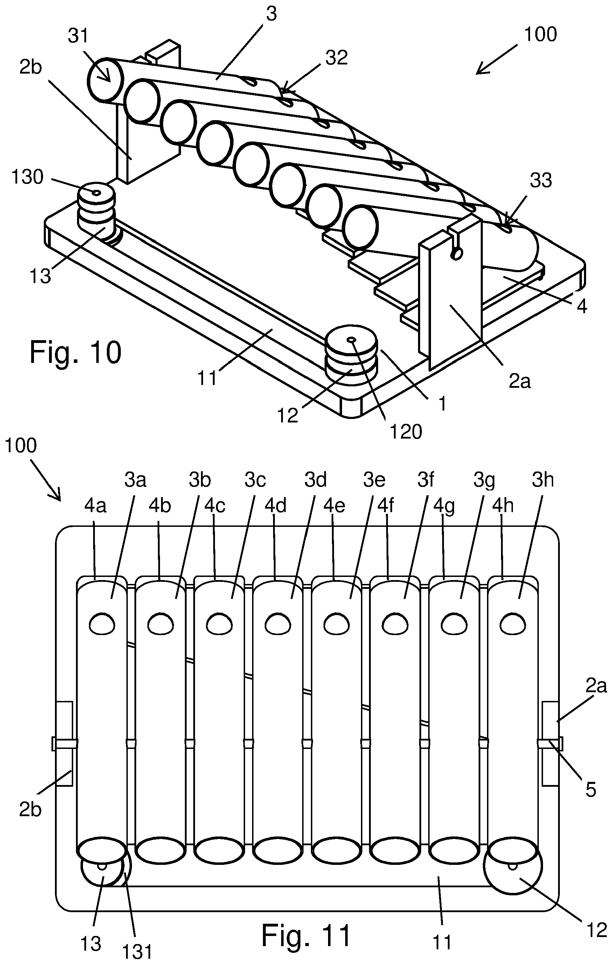

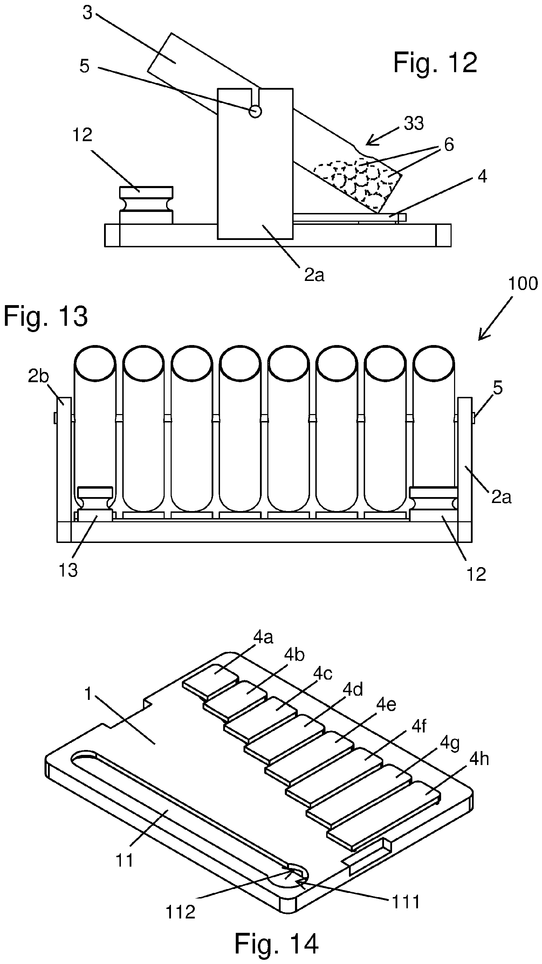

In den Fig. 10 bis 14 ist ein zweites Ausführungsbeispiel eines erfindungsgemäßen Spielzeugs 100 für Tiere dargestellt, das gleich ausgestaltet ist, wie das erste Ausführungsbeispiel, bei dem aber die Entnahme von Tierleckerein 6 aus den Hohlkörpern 3a, ..., 3h für das Tier durch Sperr-Zapfen 13 zusätzlich erschwert ist. Diese Ausgestaltungsvariante kann bei jedem beliebigen Ausführungsbeispiel eines erfindungsgemäßen Spielzeugs 100 vorgesehen sein und wird im Folgenden näher beschrieben:
Die Ausnehmung 11 in der Grundplatte 1 weist im zweiten Ausführungsbeispiel an ihrem rechten Ende eine kreisförmige Zapfen-Aufnahme-Ausnehmung 111 (siehe Fig. 14) auf. Eines solche Zapfen-Aufnahme-Ausnehmung 111 kann aber auch am linken Ende der Ausnehmung 11 oder an beiden Enden vorgesehen sein.

Weiters weist die Ausnehmung 11 rundherum verlaufende Hinterschneidungen 112 (siehe Fig. 14) auf. In der so ausgestalteten Ausnehmung 11 sind im zweiten Ausführungsbeispiel exemplarisch eine Sperr-Walze 12 und ein Sperr-Zapfen 13 angeordnet. Die Sperr-Walze 12 ist im Wesentlichen zylindrisch mit einer rundum verlaufenden Greifrille ausgebildet und in die Zapfen-Aufnahme-Ausnehmung 111 eingesteckt (siehe Fig. 10, Figl. 12 und Fig. 13). Der Sperr-Zapfen 13 weist eine ähnliche Gestalt auf, besitzt jedoch einen Kragen 131 (siehe Fig. 11), der in die Hinterschneidungen 112 eingreift.

Dadurch ist es für den Hund zuerst einmal unmöglich, den jeweiligen Hohlkörper 3a, ..., 3h vor dem der Sperr-Zapfen 13 steht, in die Fressposition zu kippen (siehe Fig. 12). Das Tier muss in diesem Fall zunächst den Sperr-Zapfen 13 zumindest verschieben, oder die Sperr-Walze 12 aus der Zapfen-Aufnahme-Ausnehmung 111 entfernen, z.B. mit der Schnauze oder einer Pfote wegstupsen, und anschließend den Sperr-Zapfen 13 in die Zapfen-Aufnahme-Ausnehmung 111 verschieben und ebenfalls entfernen zu können.

In der Ausnehmung 11 können jedoch auch genau so viele Sperr-Zapfen 13 angeordnet werden, wie Hohlkörper 3a, ..., 3h vorhanden sind. Im zweiten Ausführungsbeispiel wären dies acht. Dies bedeutet, dass das Tier den Sperr-Zapfen 13, der vor jedem Hohlkörper 3a, ..., 3h, den das Tier in die Fressposition kippen möchte, zuerst verschieben bzw. entfernen müsste.

Dass das Tier die Sperr-Zapfen 13 nicht nur verschiebt, um die einzelnen Hohlkörper 3a, ..., 3h kippen zu können, sondern gänzlich entfernt, kann gefördert werden, wenn die Sperr-Zapfen 13 und gegebenenfalls auch die Sperr-Walzen 12 einen zentralen, axialdurchlaufenden Riechkanal 130 bzw. 120 aufweisen, durch den der Geruch einer unter dem jeweiligen Sperr-Zapfen 13 bzw. der jeweiligen Sperr-Walze 12 in der Zapfen-Aufnahme-Ausnehmung 111 liegenden Tierleckerei 6 riechbar ist. Dazu kann der Sperr-Zapfen 13 oder die Sperr-Walze 12 an ihrer Unterseite eine entsprechende Aufnahme für Tierleckereien 6 aufweisen.

Wird beispielsweise unter dem Sperr-Zapfen 13 aus Fig. 10, der sich vor dem Hohlkörper 3a befindet, eine Tierleckerei 6 versteckt, ist das Tier gezwungen, zuerst einmal die - hier sogar bis zu sieben - Sperr-Zapfen 13, die sich rechts vom Sperr-Zapfen 13 mit der Tierleckerei 6 befinden, über die Zapfen-Aufnahme-Ausnehmung 111 z.B. mit einer seiner Pfoten aus der Ausnehmung 11 zu "räumen". Erst danach kann es den letzten Sperr-Zapfen 13 entfernen, um so an die darunter verborgene Tierleckerei 6 zu gelangen, die das Tier über die Riechöffnung 130 im Sperr-Zapfen 13 bereits wahrgenommen hat.

Ein erfindungsgemäßes Spielzeug 100 ist besonders stabil und einfach zu bedienen. Es bietet vielfältige Variationsmöglichkeiten, da alle Hohlkörper 3a, ..., 3h oder einzelne Hohlkörper 3a, ..., 3h in beliebiger Abfolge mit Tierleckereien gefüllt werden können. Vor allem bietet ein erfindungsgemäßes Spielzeug 100 eine längerfristige Beschäftigungsmöglichkeit für das Tier, selbst wenn das Spielzeug 100 nur einen Hohlkörper 3 aufweist, da durch die Abgabe der Geräusche bzw. Töne beim Auftreffen des geschlossenen Endes 32 des jeweiligen Hohlkörpers 3 auf der Grundplatte 1 bzw. dem Klangelement 4 Geräusche entstehen, die einen dauerhaften Spielanreiz darstellen. Weiters wird die Geschicklichkeit des Tiers gefördert, da dieses mit der Schnauze bzw. der Pfote die Schwerkraftwirkung beim jeweiligen Hohlkörper 3a, ..., 3h überwinden muss, damit dieser in die Fressposition kippt und die Tierleckereien 6 herausrollen.

## Patentansprüche

1. Spielzeug (100) zur Förderung der Intelligenz von Tieren, insbesondere von Hunden oder Katzen, umfassend
- eine Grundplatte (1), ein, insbesondere längliches, Verbindungselement (5) und von der Grundplatte (1) abstehend angeordnete Halteelemente (2a, 2b) zum Tragen des Verbindungselements (5) und
- zumindest einen länglichen, an einem Ende geschlossenen und an einem Ende offenen Hohlkörper (3), in den kleinstückige Tierleckereien (6) einlegbar sind, wobei der zumindest eine Hohlkörper (3) derart um die Längsachse des Verbindungselements (5) kippbar an dem Verbindungselement (5) angeordnet und ausgebildet ist,
- dass das geschlossene Ende (32) des Hohlkörpers (3) bei einer Betätigung durch das Tier von der Grundplatte (1) weg kippt, und
- dass der Hohlkörper (3), insbesondere nach einer Betätigung durch das Tier zur Entnahme einer Tierleckerei (6) im Bereich des offenen Endes (31) des Hohlkörpers (3), selbstständig, insbesondere der Schwerkraftwirkung folgend, in den Ausgangszustand zurückkehrt,
**dadurch gekennzeichnet,**
- **dass** zumindest ein an der Oberseite der Grundplatte (1) angeordnetes flächig, insbesondere plättchenförmiges, vorzugsweise mit rechteckiger Grundfläche, ausgebildetes Klangelement (4) vorgesehen ist,
- **dass** das Klangelement (4) an der Oberseite der Grundplatte (1) im Auflagebereich des geschlossenen Endes (32) des Hohlkörpers (3) angeordnet ist,
- **dass** das geschlossene Ende (32) des Hohlkörpers (3) in einem Ausgangszustand auf dem Klangelement (4) aufliegt, und
- **dass** ein Geräusch durch das Auftreffen des geschlossenen Endes (32) des Hohlkörpers (3) auf dem Klangelement (4) erzeugbar ist.

2. Spielzeug (100) nach Anspruch 1, **dadurch gekennzeichnet, dass** zwei an der Grundplatte (1) einander gegenüberliegend und senkrecht von der Grundplatte (1) abstehend angeordnete Halteelemente (2a, 2b) vorgesehen sind, wobei die Haltelemente (2a, 2b) miteinander mittels des Verbindungselements (5), insbesondere eines Stabelements, verbunden sind.

3. Spielzeug (100) nach Anspruch 1 oder 2, **dadurch gekennzeichnet, dass** der Hohlkörper (3) am Verbindungselement (5) nach Art einer Wippe angeordnet ist, wobei im Ausgangszustand das geschlossene Ende (32) des Hohlkörpers (3) auf dem Klangelement (4) aufliegt und das offene Ende (31) von der Grundplatte (1) beabstandet ist.

4. Spielzeug (100) nach einem der vorangehenden Ansprüche, **dadurch gekennzeichnet, dass** der zumindest eine Hohlkörper (3) bei einer Betätigung durch das Tier, insbesondere mit einer Pfote oder der Schnauze, entgegen der Schwerkraftwirkung um das Verbindungselement (5) in eine Fressposition kippbar ist, wobei das offene Ende (31) des Hohlkörpers (3) in der Fressposition auf dem auf der Oberseite der Grundplatte (1) angeordneten Klangelement (4) aufliegt, sodass sich im Inneren des Hohlkörpers (3) befindliche Tierleckereien (6) der Schwerkraftwirkung folgend aus dem Hohlkörper (3) heraus bewegen.

5. Spielzeug (100) nach einem der vorangehenden Ansprüche, **dadurch gekennzeichnet,**
- **dass** das Spielzeug (100) eine Vielzahl von Hohlkörpern (3a, ..., 3h) umfasst, die nebeneinander angeordnet sind,
- **dass** das Spielzeug (100) eine Vielzahl von separaten, an der Oberseite der Grundplatte (1) nebeneinander angeordneten, Klangelementen (4a, ..., 4h) umfasst, und
- **dass** die einzelnen Hohlkörper (3a, ..., 3h) am Verbindungselement (5) und die einzelnen Klangelemente (4a, ..., 4h) an der Oberseite der Grundplatte (1) jeweils derart angeordnet sind, dass jedem Hohlkörper (3a, ..., 3h) jeweils ein Klangelement (4a, ..., 4h) zugeordnet ist.

6. Spielzeug (100) nach einem der vorangehenden Ansprüche, **dadurch gekennzeichnet,**
- **dass** die einzelnen Klangelemente (4; 4a, ..., 4h) jeweils unterschiedliche Länge und/oder unterschiedliche Töne oder Tonhöhen aufweisen, und/oder
- **dass** die Klangelemente (4; 4a, ..., 4h) zwischen den Haltelement (2a, 2b) nach steigender Länge angeordnet sind.

7. Spielzeug (100) nach einem der vorangehenden Ansprüche, **dadurch gekennzeichnet, dass** jedes Klangelement (4; 4a, ..., 4h) jeweils aus Holz oder Metall oder einer Metalllegierung besteht.

8. Spielzeug (100) nach einem der vorangehenden Ansprüche, **dadurch gekennzeichnet, dass** jeder Hohlkörper (3; 3a, ..., 3h) jeweils eine zylindrische Form, insbesondere mit elliptischem oder kreisförmigem Querschnitt, oder eine prismatische Form, insbesondere mit quadratischem, rechteckigem, sechseckigem oder achteckigem Querschnitt, besitzt.

9. Spielzeug (100) nach einem der vorangehenden Ansprüche, **dadurch gekennzeichnet, dass** ausgewählte, insbesondere alle, Hohlkörper (3; 3a, ..., 3h) im Bereich des geschlossenen Endes (32) jeweils eine, insbesondere kreisförmige, Riechöffnung (33) aufweisen, durch die der Geruch von in den Hohlkörper (3; 3a, ..., 3h) eingelegten Tierleckereien (6) riechbar ist.

10. Spielzeug (100) nach Anspruch 9, **dadurch gekennzeichnet, dass** die Riechöffnung (33) jeweils in der Mantelfläche des jeweiligen Hohlkörpers (3; 3a, ..., 3h) angeordnet ist, wobei insbesondere vorgesehen ist, dass der Mittelpunkt der Riechöffnung (33) in einer Entfernung zum geschlossenen Ende (32) von 15-40% der Länge des Hohlkörpers (3; 3a, ..., 3h) angeordnet ist.

11. Spielzeug (100) nach einem der vorangehenden Ansprüche, **dadurch gekennzeichnet, dass** in der Mantelfläche jedes Hohlkörpers (3; 3a, ..., 3h) jeweils zwei einander, insbesondere auf gleicher Höhe, gegenüberliegende Öffnungen (34a, 34b) zur Hindurchführung des Verbindungselement (5) angeordnet sind, wobei die Öffnungen vom Schwerpunkt des jeweiligen Hohlkörpers (3; 3a, ..., 3h) in Richtung des offenen Endes (31) des jeweiligen Hohlkörpers (3; 3a, ..., 3h) versetzt angeordnet sind.

12. Spielzeug (100) nach Anspruch 11, **dadurch gekennzeichnet, dass** der Mittelpunkt der Öffnungen (34a, 34b) jeweils in einer Entfernung zum offenen Ende (31) von 25-45% der Länge des jeweiligen Hohlkörpers (3; 3a, ..., 3h) angeordnet ist.

13. Spielzeug (100) nach einem der vorangehenden Ansprüche, **dadurch gekennzeichnet, dass** der Abstand zwischen dem offenen Ende (31) des Hohlkörpers (3) und dem Drehpunkt des Hohlkörpers (3) um das Verbindungselement (4) kleiner ist, als der Abstand zwischen dem Drehpunkt und dem geschlossenen Ende (32) des Hohlkörpers (3).

14. Spielzeug (100) nach einem der vorangehenden Ansprüche, **dadurch gekennzeichnet, dass** der Hohlkörper (3) mit der Grundplatte (1) im Ausgangszustand einen Winkel von 25° bis 60° einschließt und/oder dass der Hohlkörper (3) mit der Grundplatte (1) in der Fressposition einen Winkel von 45° bis 90° einschließt.

15. Spielzeug (100) nach einem der vorangehenden Ansprüche, **dadurch gekennzeichnet, dass** das Verbindungselement (5), insbesondere das Stabelement, mit dem von der Oberseite der Grundplatte (1) entfernten Endbereich des jeweiligen Haltelements (2a, 2b), insbesondere reversibel, verbunden ist.

## Claims

1. Toy (100) for promoting the intelligence of animals, in particular dogs or cats, comprising
- a base plate (1), an, in particular elongate, connecting element (5) and holding elements (2a, 2b), which protrude from the base plate (1), for supporting the connecting element (5), and
- at least one elongated hollow body (3) which is closed at one end and open at another end and into which small-sized animal treats (6) can be placed, wherein the at least one hollow body (3) is arranged on the connecting element (5) so as to be tiltable about the longitudinal axis of the connecting element (5) and is designed such that
- the closed end (32) of the hollow body (3) tilts away from the base plate (1) when actuated by the animal,
- the hollow body (3) returns to the initial state automatically, in particular after being actuated by the animal in order to remove an animal treat (6) in the region of the open end (31) of the hollow body (3), in particular under the effect of gravity, **characterised in that**
- at least one sound element (4) is provided which is arranged on the top of the base plate (1), which sound element is flat, in particular plate-shaped, preferably with a rectangular base,
- the sound element (4) is arranged on the top of the base plate (1) in the support region of the closed end (32) of the hollow body (3),
- the closed end (32) of the hollow body (3) rests on the sound element (4) in an initial state, and
- a noise can be generated by the impact of the closed end (32) of the hollow body (3) on the sound element (4).

2. Toy (100) according to claim 1, **characterised in that** two holding elements (2a, 2b) arranged opposite one another on the base plate (1) and protruding perpendicularly from the base plate (1) are provided, wherein the holding elements (2a, 2b) are connected to one another by means of the connecting element (5), in particular a rod element.

3. Toy (100) according to claim 1 or 2, **characterised in that** the hollow body (3) is arranged on the connecting element (5) in the manner of a rocker, wherein in the initial state the closed end (32) of the hollow body (3) rests on the sound element (4) and the open end (31) is spaced from the base plate (1).

4. Toy (100) according to any one of the preceding claims, **characterised in that** the at least one hollow body (3), when actuated by the animal, in particular with a paw or the snout, is tiltable against the effect of gravity about the connecting element (5) into an eating position, wherein the open end (31) of the hollow body (3) rests in the eating position on the sound element (4) arranged on the top of the base plate (1), such that animal treats (6) located inside the hollow body (3) move out of the hollow body (3) under the effect of gravity.

5. Toy (100) according to any one of the preceding claims, **characterised in that**
- the toy (100) comprises a plurality of hollow bodies (3a, ..., 3h) which are arranged next to one another,
- the toy (100) comprises a plurality of separate sound elements (4a, ..., 4h) arranged next to one another on the top of the base plate (1), and
- the individual hollow bodies (3a, ..., 3h) are each arranged on the connecting element (5) and the individual sound elements (4a, ..., 4h) are each arranged on the top of the base plate (1) in such a way that each hollow body (3a, ..., 3h) is assigned a sound element (4a, ..., 4h).

6. Toy (100) according to any one of the preceding claims, **characterised in that**
- the individual sound elements (4; 4a, ..., 4h) each have different lengths and/or different tones or pitches and/or
- the sound elements (4; 4a, ..., 4h) between the holding element (2a, 2b) are arranged according to increasing length.

7. Toy (100) according to any one of the preceding claims, **characterised in that** each sound element (4; 4a, ..., 4h) consists of wood or metal or a metal alloy.

8. Toy (100) according to any one of the preceding claims, **characterised in that** each hollow body (3; 3a, ..., 3h) has a cylindrical shape, in particular with an elliptical or circular cross-section, or a prismatic shape, in particular with a square, rectangular, hexagonal or octagonal cross-section.

9. Toy (100) according to any one of the preceding claims, **characterised in that** selected, in particular all, hollow bodies (3; 3a, ..., 3h) in the region of the closed end (32) each have one, in particular circular, olfactory opening (33) through which the smell of animal treats (6) placed in the hollow body (3; 3a, ..., 3h) can be smelled.

10. Toy (100) according to claim 9, **characterised in that** the olfactory opening (33) is arranged in each case in the shell surface of the respective hollow body (3; 3a, ..., 3h), wherein it is provided in particular that the centre of the olfactory opening (33) is arranged at a distance from the closed end (32) of 15-40% of the length of the hollow body (3; 3a, ..., 3h).

11. Toy (100) according to any one of the preceding claims, **characterised in that** two openings (34a, 34b) are arranged in the shell surface of each hollow body (3; 3a, ..., 3h) opposite one another, in particular at the same height, for passage of the connecting element (5), wherein the openings are arranged offset from the centre of gravity of the respective hollow body (3; 3a, ..., 3h) in the direction of the open end (31) of the respective hollow body (3; 3a, ..., 3h).

12. Toy (100) according to claim 11, **characterised in that** the centre of the openings (34a, 34b) is arranged in each case at a distance from the open end (31) of 25-45% of the length of the respective hollow body (3; 3a, ..., 3h).

13. Toy (100) according to any one of the preceding claims, **characterised in that** the distance between the open end (31) of the hollow body (3) and the pivot point of the hollow body (3) about the connecting element (4) is smaller than the distance between the pivot point and the closed end (32) of the hollow body (3).

14. Toy (100) according to any one of the preceding claims, **characterised in that** the hollow body (3) in the initial state encloses an angle of 25° to 60° with the base plate (1) and/or **in that** the hollow body (3) encloses an angle of 45° to 90° with the base plate (1) in the eating position.

15. Toy (100) according to any one of the preceding claims, **characterised in that** the connecting element (5), in particular the rod element, is connected, in particular reversibly, with the end region of the respective holding element (2a, 2b) remote from the top of the base plate (1).

## Revendications

1. Jouet (100) pour promouvoir l'intelligence d'animaux, en particulier de chiens ou de chats, comprenant
- une plaque de base (1), un élément de liaison (5), en particulier oblong et des éléments de retenue (2a, 2b) agencés en saillie de la plaque de base (1) pour le support de l'élément de liaison (5) et
- au moins un corps creux (3) oblong, fermé à une extrémité et ouvert à une extrémité, dans lequel des friandises pour animaux (6) en petits morceaux peuvent être introduites, dans lequel l'au moins un corps creux (3) est agencé et réalisé de manière basculable autour de l'axe longitudinal de l'élément de liaison (5) au niveau de l'élément de liaison (5) de telle manière que
- l'extrémité fermée (32) du corps creux (3) bascule lors d'un actionnement par l'animal loin de la plaque de base (1), et
- le corps creux (3) revient automatiquement, en particulier suivant la force de gravité, dans l'état de départ, en particulier après un actionnement par l'animal pour le retrait d'une friandise pour animaux (6) dans la zone de l'extrémité ouverte (31) du corps creux (3),
**caractérisé en ce que**
- au moins un élément sonore (4) agencé au niveau du côté supérieur de la plaque de base (1), réalisé à plat, en particulier en forme de petite plaque, de préférence avec une surface de base rectangulaire est prévu,
- l'élément sonore (4) est agencé au niveau du côté supérieur de la plaque de base (1) dans la zone d'appui de l'extrémité fermée (32) du corps creux (3),
- l'extrémité fermée (32) du corps creux (3) repose dans un état de départ sur l'élément sonore (4), et
- un bruit peut être généré par l'impact de l'extrémité fermée (32) du corps creux (3) sur l'élément sonore (4).

2. Jouet (100) selon la revendication 1, **caractérisé en ce que** deux éléments de retenue (2a, 2b) agencés à l'opposé l'un de l'autre au niveau de la plaque de base (1) et en saillie perpendiculairement de la plaque de base (1) sont prévus, dans lequel les éléments de retenue (2a, 2b) sont reliés l'un à l'autre au moyen de l'élément de liaison (5), en particulier un élément de barre.

3. Jouet (100) selon la revendication 1 ou 2, **caractérisé en ce que** le corps creux (3) est agencé au niveau de l'élément de liaison (5) comme une bascule, dans lequel dans l'état de départ, l'extrémité fermée (32) du corps creux (3) repose sur l'élément sonore (4) et l'extrémité ouverte (31) est espacée de la plaque de base (1).

4. Jouet (100) selon l'une quelconque des revendications précédentes, **caractérisé en ce que** l'au moins un corps creux (3) est basculable lors d'un actionnement par l'animal, en particulier avec une patte ou le museau, dans le sens inverse à la force de gravité autour de l'élément de liaison (5) dans une position d'alimentation, dans lequel l'extrémité ouverte (31) du corps creux (3) repose dans la position d'alimentation sur l'élément sonore (4) agencé sur le côté supérieur de la plaque de base (1) de sorte que des friandises pour animaux (6) se trouvant à l'intérieur du corps creux (3) se déplacent suivant la force de gravité hors du corps creux (3).

5. Jouet (100) selon l'une quelconque des revendications précédentes, **caractérisé en ce que**
- le jouet (100) comprend une pluralité de corps creux (3a, ..., 3h) qui sont agencés les uns à côté des autres,
- le jouet (100) comprend une pluralité d'éléments sonores (4a,..., 4h) séparés, agencés au niveau du côté supérieur de la plaque de base (1) les uns à côté des autres, et
- les corps creux (3a,..., 3h) individuels sont agencés au niveau de l'élément de liaison (5) et les éléments sonores (4a, ..., 4h) individuels sont agencés au niveau du côté supérieur de la plaque de base (1) respectivement de telle manière que respectivement un élément sonore (4a, ..., 4h) soit associé à chaque corps creux (3a, ..., 3h).

6. Jouet (100) selon l'une quelconque des revendications précédentes, **caractérisé en ce que**
- les éléments sonores (4 ; 4a, ..., 4h) individuels présentent respectivement une longueur différente et/ou différents tons ou tonalités, et/ou
- les éléments sonores (4 ; 4a, ..., 4h) sont agencés entre l'élément de retenue (2a, 2b) selon la longueur croissante.

7. Jouet (100) selon l'une quelconque des revendications précédentes, **caractérisé en ce que** chaque élément sonore (4; 4a, ..., 4h) se compose respectivement de bois ou de métal ou d'un alliage de métal.

8. Jouet (100) selon l'une quelconque des revendications précédentes, **caractérisé en ce que** chaque corps creux (3 ; 3a, ..., 3h) possède respectivement une forme cylindrique, en particulier avec une section transversale elliptique ou circulaire, ou une forme prismatique, en particulier avec une section transversale carrée, rectangulaire, hexagonale ou octogonale.

9. Jouet (100) selon l'une quelconque des revendications précédentes, **caractérisé en ce que** des corps creux (3 ; 3a, ..., 3h) sélectionnés, en particulier tous, présentent dans la zone de l'extrémité fermée (32) respectivement une ouverture à odeur (33), en particulier circulaire, par laquelle l'odeur de friandises pour animaux (6) introduites dans le corps creux (3 ; 3a, ..., 3h) peut être sentie.

10. Jouet (100) selon la revendication 9, **caractérisé en ce que** l'ouverture à odeur (33) est agencée respectivement dans la surface enveloppe du corps creux (3 ; 3a, ..., 3h) respectif, dans lequel il est en particulier prévu que le point médian de l'ouverture à odeur (33) soit agencé à une distance de l'extrémité fermée (32) de 15 à 40 % de la longueur du corps creux (3 ; 3a, ..., 3h).

11. Jouet (100) selon l'une quelconque des revendications précédentes, **caractérisé en ce que** respectivement deux ouvertures (34a, 34b) opposées en particulier à la même hauteur sont agencées dans la surface enveloppe de chaque corps creux (3 ; 3a, ..., 3h) pour le passage de l'élément de liaison (5), dans lequel les ouvertures sont agencées en déport du centre de gravité du corps creux (3 ; 3a, ..., 3h) respectif en direction de l'extrémité ouverte (31) du corps creux (3 ; 3a, ..., 3h) respectif.

12. Jouet (100) selon la revendication 11, **caractérisé en ce que** le point médian des ouvertures (34a, 34b) est agencé respectivement à une distance de l'extrémité ouverte (31) de 25 à 45 % de la longueur du corps creux (3 ; 3a, ..., 3h) respectif.

13. Jouet (100) selon l'une quelconque des revendications précédentes, **caractérisé en ce que** la distance entre l'extrémité ouverte (31) du corps creux (3) et le point de rotation du corps creux (3) autour de l'élément de liaison (4) est inférieure à la distance entre le point de rotation et l'extrémité fermée (32) du corps creux (3).

14. Jouet (100) selon l'une quelconque des revendications précédentes, **caractérisé en ce que** le corps creux (3) avec la plaque de base (1) forme dans l'état de départ un angle de 25° à 60° et/ou **en ce que** le corps creux (3) avec la plaque de base (1) forme dans la position d'alimentation un angle de 45° à 90°.

15. Jouet (100) selon l'une quelconque des revendications précédentes, **caractérisé en ce que** l'élément de liaison (5), en particulier l'élément de barre, est relié à la zone d'extrémité éloignée du côté supérieur de la plaque de base (1) de l'élément de retenue (2a, 2b) respectif, en particulier de manière réversible.
